# EUROPEAN PATENT SPECIFICATION

(11) **EP 2 044 846 B1**
(45) Date of publication and mention of the grant of the patent: **26.01.2011**
(21) Application number: 08460037.8
(22) Date of filing: 18.09.2008
(51) Int. Cl.: A23L 1/00, C12G 3/00

(54) **Food product comprising granulated alcohol**
Lebensmittelprodukt mit granuliertem Alkohol
Produit alimentaire comprenant l`alcool granulé

(30) Priority: 22.09.2007 PL 38341107
(43) Date of publication of application: 08.04.2009
(73) Proprietor: Mokate S.A., 43-450 Ustron (PL)
(72) Inventor: Cambala, Vojtech, Otrokovice 765 02 (CZ)
(74) Representative: Rygiel, Andrzej

(56) References cited:
- EP-A- 0 870 537
- WO-A-2004/014142
- WO-A-2005/094600
- DE-A1- 19 500 919
- US-B1- 6 238 672

## Description

The object of invention is a food product comprising granulated alcohol, in powder form, used for preparation of a beverage on the basis of plant and fruit products with alcoholic content, soluble in hot water.

There are popular coffee blends, for example of "cappuccino" type, that contain glucose syrup, sugar, instant coffee, vegetable fat, powdered milk and stabilizer as well as flavours and fragrances. There are also magnesium enriched cappuccino coffees or cappuccino coffees with other additives that give coffee a specific flavour or supplementing the diet with microelements or weight loss stimulants. A hot "cappuccino" drink is usually prepared by dissolving a "cappuccino" blend in hot liquid, such as hot water or hot milk.

There is a product known from the Polish patent application no. P-366746 and EP 04008560.7 application combined in International Publication WO 2005/094600 containing sugar, glucose, glucose syrup, instant coffee, chicory coffee, vegetable fat, milk proteins and stabilizer, emulsifier as well as fragrances and colouring agents that is characterised by that it contains 34 to 38 % by weight of sugar, 23 to 26 % by weight of glucose, 13 to 16 % by weight of glucose syrup, 6 to 7 % by weight of alcohol, 2 to 4 % by weight of instant coffee, 4 to 6 % by weight of chicory coffee, 6 to 8 % by weight of vegetable fat, 0.5 to 1% by weight of milk proteins, 0.4 to 0.5 % by weight of stabilizer E-340 (ii), 0.5 to 1 % by weight of emulsifier E-471 and 0.1 to 0.3% by weight of fragrances and colouring agents.

There are beverage concentrates, freezable beverages and frozen beverages known from International Publication WO 2004/014142 comprising a sweetener, such as Sucralose, Acesulfame K, Aspartame, Neotame, Saccharin, flavouring agents, such as fruit, coffee extracts, tea extracts, colouring, such as caramel colour, and a small amount of alcohol, depending on the product

There are soluble beverage blends known from the German patent description no. DE 195 00 919 and EP 0 870 537 containing alcohol that can be produced by adsorption of ingredients containing alcohol into non-volatilising ingredients. Binding of alcohol to the surface by means of adsorption is not able to encapsulate alcohol on a permanent basis, which limits possible application and results in substantial losses of alcohol when unpacked.

There are dietary supplements known from the US patent description no. US 6 238 672 containing dehydrated cactus fruit juice and ginseng berry juice, where plant and fruit products are used together and such a powdered drink can be the component of a drink or drink mix.

The purpose of the invention is to develop a recipe of a food product in the form of a drink on the basis of plant and fruit products, with alcoholic content in its composition in dry form, especially in the form of powder that is suitable for direct consumption after adding water, usually of the temperature lower than 100°C.

The additional purpose of this invention is to add a small quantity of alcohol to a ready-to-drink beverage on the basis of plant and fruit products, which will give a consumer the impression of considerably higher alcoholic content, since the blend of water soluble ingredients of plant and fruit products, alcohol containing granulated product as well as flavours give the impression of higher alcoholic content during consumption of the ready-to-drink beverage. Sensory impressions, especially taste impressions and physiological effects during consumption of the ready-to-drink beverage on the basis of plant and fruit products are so unexpected that, irrespective of the fact that the ready-to-drink beverage contains less than 1%volume of alcohol, a consumer has the impression that there is a higher alcoholic content in the aforementioned ready-to-drink beverage. The sensory tests performed indicated that not only an alcoholic flavour could be sensed above the real content, but there were also physiological effects observed manifesting themselves in a glow on cheeks, the feeling of slight daze, improved mood and frame of mind, i.e. the feelings that are well known and tend to accompany consumption of beverages containing approximately 10-15% volume of alcohol. This placebo effect is significant and surprising, as the real alcoholic content cannot be blamed for the aforementioned effects.

The food product containing granulated alcohol and plant and fruit products, sweetening agents in the form of aspartame and/or sodium cyclamate, and/or sodium saccharin and/or acesulfam-K and odorants and colouring agents in the form of fruit flavours, as per the invention, characterised by that it is constituted by the dry blend of soluble ingredients containing from 10 to 50 mass fraction of apple fruit, from 10 to 40 mass fraction of hibiscus flower, from 1 to 15 mass fraction of blackcurrant fruit, from 1 to 15 mass fraction of roasted chicory root, from 1 to 20 mass fraction of cinnamon, from 0.5 to 10 mass fraction of cloves, from 1 to 15 mass fraction of orange skin, from 0.1 to 10 mass fraction of liquorice, from 0.1 to 8 mass fraction of ginger and from 0.1 to 12 mass fraction of granulated alcohol.

A sample composition of the food product according to the invention in powder form used for preparation of a beverage on the basis of plant and fruit products with alcoholic content, soluble in hot water, has been presented below.

**Example.** The food product is a dry mix of soluble ingredients containing 29.9 mass fraction of apple fruit, 20 mass fraction of hibiscus flower, 7 mass fraction of blackcurrant fruit, 7 mass fraction of roasted chicory root, 10 mass fraction of cinnamon, 2 mass fraction of cloves, 8 mass fraction of orange peel, 4 mass fraction of liquorice, 0.4 mass fraction of ginger, 7.5 mass fraction of fruit essence, 1 mass fraction of sodium cyclamate, 2.2 mass fraction of citric acid and 1 mass fraction of granulated alcohol.

The dissolution of the dry mix of ingredients depends on how long the water solution remains in a container with the food product and is accompanied by stirring, until there is no mix left in the container. Normally, 22 g of the food product in the form of soluble drink powder dissolves in a 200 ml mug containing 170 ml water in the temperature of approximately 77°C in less than 15 seconds. More often, the food product, especially soluble drink powder according to the invention, dissolves in less than approximately 10 seconds, and more often in less than 7 seconds.

## Claims

1. The food product containing granulated alcohol and plant and fruit products, sweetening agents in the form of aspartame and/or sodium cyclamate, and/or sodium saccharin and/or acesulfam-K and odorants and colouring agents in the form of fruit flavours, **characterised by that** it is constituted by the dry blend of soluble ingredients containing from 10 to 50 mass fraction of apple fruit, from 10 to 40 mass fraction of hibiscus flower, from 1 to 15 mass fraction_of blackcurrant fruit, from 1 to 15 mass fraction of roasted chicory root, from 1 to 20 mass fraction of cinnamon, from 0.5 to 10 mass fraction of cloves, from 1 to 15 mass fraction of orange skin, from 0.1 to 10 mass fraction of liquorice, from 0.1 to 8 mass fraction of ginger and from 0.1 to 12 mass fraction of granulated alcohol.

## Patentansprüche

1. Ein Lebensmittelprodukt mit granulierten Alkohol, pflanzliche Produkte und Früchte, Süßstoffe in Form von Aspartam und/oder Natriumcyclamat, und/oder Natriumsaccharin, und/oder Acesulfam-K sowie Geruchsstoffe und Farbstoffe in Form von Fruchtaromen enthält, **gekennzeichnet dadurch, dass** es aus einer Trockenmischung von löslichen Inhaltsstoffen zusammengesetzt ist, die von 10 bis 50 Massenanteile Apfelfrucht, von 10 bis 40 Massenanteile Hibiskusblüte, von 1 bis 15 Massenanteile Früchte der schwarzen Johannisbeere, von 1 bis 15 Massenanteile gerösteter Chicorée-Wurzel, von 1 bis 20 Massenanteile Zimt, von 0,5 bis 10 Massenanteile Nelken, von 1 bis 15 Massenanteile Orangenschale, von 0,1 bis 10 Massenanteile Lakritze, von 0,1 bis 8 Massenanteile Ingwer sowie von 0,1 bis 12 Massenanteile granulierten Alkohols enthalten.

## Revendications

1. Produit alimentaire contenant l'alcool granulé et des produits végétaux et fruits, des édulcorants sous forme d'aspartame et/ou de saccharine de sodium et/ou d'acésulfame-K, des arômes et des colorants sous forme d'arômes de fruits **caractérisé en ce qu'**il est composé de mélange sec d'éléments solubles contenant de 10 à 50 fractions massiques de fruit de pomme, de 10 à 40 fractions massiques de fleur d'hibiscus, de 1 à 15 fractions massiques de fruit de cassis, de 1 à 15 fractions massiques de racine de chicorée, de 1 à 20 fractions massiques de cannelle, de 0,5 à 10 fractions massiques de clous de girofle, de 1 à 15 fractions massiques de zeste d'orange, de 0,1 à 10 fractions massiques de réglisse, de 0,1 à 8 fractions massiques de gingembre et de 0,1 à à 12 fractions massiques d'alcool granulé.
